# EUROPEAN PATENT SPECIFICATION

(11) **EP 3 686 453 B1**
(45) Date of publication and mention of the grant of the patent: **12.04.2023**
(21) Application number: 18859591.2
(22) Date of filing: 20.09.2018
(51) Int. Cl.: F16D 41/10, B60N 2/16, F16D 41/067, F16D 63/00

(54) **CLUTCH UNIT**
KUPPLUNGSEINHEIT
UNITÉ D'EMBRAYAGE

(30) Priority: 21.09.2017 JP 2017181067; 27.08.2018 JP 2018158146
(43) Date of publication of application: 29.07.2020
(73) Proprietor: NTN Corporation, Osaka-shi, Osaka 550-0003 (JP)
(72) Inventor: WATANABE, Kengo, Iwata-shi Shizuoka 438-8510 (JP)
(74) Representative: Eder Schieschke & Partner mbB
(86) International application number: PCT/JP2018/034846
(87) International publication number: WO 2019/059287

(56) References cited:
- EP-A1- 1 867 518
- JP-A- 2013 224 692
- JP-A- 2017 026 140
- JP-A- 2017 171 007
- JP-A- 2017 172 590
- KR-A- 20130 024 640
- US-A1- 2002 043 849

## Description

### TECHNICAL FIELD

The present invention relates to a clutch unit including an input-side clutch part to which a rotational torque is input, and an output-side clutch part that transmits the rotational torque from the input-side clutch part to an output side and blocks the rotational torque from the output side.

### BACKGROUND ART

In a clutch unit using engagement elements such as cylindrical rollers or balls, a clutch part is provided between an input member and an output member. The clutch part is configured to control transmission and blocking of a rotational torque by engaging and disengaging the engagement elements between the input member and the output member.

The present applicant has previously proposed a clutch unit incorporated in an automobile seat lifter unit that adjusts a seat up and down by lever operation (for example, see Patent Literature 1).

The clutch unit disclosed in Patent Literature 1 includes a lever-side clutch part to which a rotational torque is input by lever operation, and a brake-side clutch part that transmits the rotational torque from the lever-side clutch part to the output side and blocks the rotational torque from the output side.

The lever-side clutch part has its main part constituted of an outer ring to which the rotational torque is input by lever operation, an inner ring that transmits the rotational torque input from the outer ring to the brake-side clutch part, and cylindrical rollers that control transmission and blocking of the rotational torque from the outer ring by engagement with and disengagement from a wedge gap between the outer ring and the inner ring.

The brake-side clutch part has its main part constituted of an inner ring to which the rotational torque from the lever-side clutch part is input, an output shaft to which the rotational torque from the inner ring is output, an outer ring whose rotation is restricted, and cylindrical rollers that control blocking of the rotational torque from the output shaft and transmission of the rotational torque from the inner ring by engagement with and disengagement from a wedge gap between the output shaft and the outer ring.

In the lever-side clutch part, when the rotational torque is input to the outer ring by lever operation, the cylindrical rollers are engaged with the wedge gap between the outer ring and the inner ring. By this engagement of the cylindrical rollers with the wedge gap, the rotational torque is transmitted to the inner ring, and the inner ring rotates.

In the brake-side clutch part, when the rotational torque is reversely input to the output shaft due to seating on the seat, the cylindrical rollers are engaged with the wedge gap between the output shaft and the outer ring, and the output shaft is locked to the outer ring. By this locking of the output shaft, the rotational torque reversely input from the output shaft is blocked. Thereby, a seat surface height of the seat is maintained.

On the other hand, when the rotational torque is input from the lever-side clutch part to the brake-side clutch part, the inner ring presses the cylindrical rollers, and the cylindrical rollers are disengaged from the wedge gap between the output shaft and the outer ring. This disengagement of the cylindrical rollers from the wedge gap releases the locked state of the output shaft, and the output shaft becomes rotatable.

Then, as the inner ring further rotates, the rotational torque from the inner ring is transmitted to the output shaft, and the output shaft rotates. By this rotation of the output shaft, the seat surface height of the seat can be adjusted. An other example of control unit for a seat lifter can be found in patent literature 2.

### CITATIONS LIST

### PATENT LITERATURE

Patent Literature 1: JP 5207779 B2
Patent Literature 2: EP 1867518 A1

### SUMMARY OF INVENTION

### TECHNICAL PROBLEMS

In the conventional clutch unit disclosed in Patent Literature 1, when the rotational torque is reversely input to the output shaft by an occupant sitting on the seat, the cylindrical rollers are engaged with the wedge gap between the output shaft and the outer ring, and the output shaft is locked to the outer ring.

In this way, the rotational torque reversely input from the output shaft is locked by the engagement of the cylindrical rollers with the wedge gap between the output shaft and the outer ring at the brake-side clutch part, and recirculation of the rotational torque to the lever-side clutch part is blocked. Thereby, a seat surface height of the seat is maintained.

Here, in a state where the output shaft is locked only by the cylindrical rollers at the brake-side clutch part, when a shocking load is reversely input to the output shaft at the time of a vehicle collision, the cylindrical rollers are repelled from the wedge gap between the output shaft and the outer ring, causing the cylindrical rollers to be disengaged from the wedge gap, and accordingly, the locked state of the output shaft becomes difficult to be secured.

In addition, with the clutch unit incorporated in the automobile seat lifter unit, when vertical vibrations occur during running of a vehicle on a rough road in a state of the seat being seated, the rotational torque in the forward direction and the rotational torque in the reverse direction are reversely input to the output shaft in an alternately continuous state.

At this time, in the brake-side clutch part, a contact position of each cylindrical roller with the wedge gap between the output shaft and the outer ring is slightly shifted, and hysteresis of elastic deformation exists on the output shaft, the outer ring, and the cylindrical rollers to which the rotational torque is applied, which may cause the output shaft to gradually rotate. As a result, a phenomenon occurs in which the seat is slightly lowered.

Therefore, the present invention has been proposed in view of the above-described problem, and an object of the present invention is to provide a clutch unit having a structure that can keep locking the output shaft even when the shocking load is reversely input to the output shaft, or even when the rotational torque in the forward and reverse directions is reversely input continuously to the output shaft.

### SOLUTION TO PROBLEMS

The clutch unit according to the present invention contains all the features as drafted in claim 1.

As technical means for achieving the above-described object, the output-side clutch part of the present invention includes a stationary member whose rotation is restrained, and an output member whose rotation is output, and further, the stationary member is attached with a female gear member that meshes with the output member when the rotational torque is blocked and is unmeshed from the output member when the rotational torque is transmitted, and the output member is attached with a male gear member that meshes with the female gear member.

In the present invention, by attaching the female gear member to the stationary member and attaching the male gear member to the output member, when the output member is locked, the output member can be kept locked by having the female gear member of the stationary member meshed with the male gear member of the output member, even when the shocking load is reversely input to the output member, or even when the rotational torque in the forward and reverse directions is reversely input continuously to the output member.

In addition, in the present invention, because the male gear member is attached to the output member, the male gear member can be manufactured separately from the output member, and accordingly, productivity can be improved and manufacturing costs can be reduced.

It is effective that the output-side clutch part according to the present invention has a structure which includes engagement elements that control blocking of the rotational torque reversely input from the output member and transmission of the rotational torque input from a coupling member, and in which the engagement elements are arranged at three locations in a circumferential direction between the stationary member and the output member.

When the shocking load is reversely input to the output member, or when the rotational torque in the forward and reverse directions are reversely input continuously to the output member, the female gear member of the stationary member and the male gear member of the output member mesh with each other, to allow the output member to be securely locked. Accordingly, the number of engagement elements having a function of controlling blocking and transmission of the normal rotational torque can be set to the minimum necessary.

By arranging the minimum necessary number of engagement elements in this way, the output-side clutch part, and thus the entire clutch unit, can be reduced in size and cost. Further, by arranging the engagement elements at three locations in the circumferential direction, a torque distribution becomes well balanced.

The male gear member according to the present invention preferably has a structure in which the male gear member is attached to the output member with a detent part interposed therebetween.

If the above structure is adopted, the detent part causes the male gear member to co-rotate around the output member without slipping in the rotation direction.

The input-side clutch part according to the present invention preferably has a structure which includes engagement elements that control transmission and blocking of the rotational torque from an input member by engagement and disengagement between the input member and the coupling member, and in which a pitch circle diameter (PCD) of the engagement element of the output-side clutch part is set smaller than a PCD of the engagement element of the input-side clutch part.

By adopting the above structure, it is possible to reduce the outer diameter of the output-side clutch part while maintaining a torque capacity by reducing the number of engagement elements of the output-side clutch part and changing the size of the engagement elements.

The input-side clutch part and the output-side clutch part according to the present invention preferably have a structure incorporated in the automobile seat lifter unit.

If the above structure is adopted, in the automobile seat lifter unit, in a state of the seat being seated, even when the shocking load is reversely input to the output member at the time of the vehicle collision, or when the rotational torque in the forward and reverse directions is reversely input continuously to the output member by vertical vibrations during running of the vehicle on the rough road, the output member can be kept locked, and the seat surface height of the seat can be maintained.

### ADVANTAGEOUS EFFECTS OF INVENTION

According to the present invention, by attaching the female gear member to the stationary member and attaching the male gear member to the output member, when the output member is locked, the output member can be kept locked by having the female gear member of the stationary member meshed with the male gear member of the output member, even when the shocking load is reversely input to the output member, or even when the rotational torque in the forward and reverse directions is reversely input continuously to the output member.

### BRIEF DESCRIPTION OF DRAWINGS

FIG. 1 is a cross-sectional view showing an overall configuration of a clutch unit in an embodiment of the present invention.
FIG. 2 is a cross-sectional view taken along a line P-P in FIG. 1.
FIG. 3 is a cross-sectional view taken along a line Q-Q in FIG. 1.
FIG. 4 is a configuration diagram showing a seat and a seat lifter unit of an automobile.
FIG. 5 is an exploded perspective view showing a side plate, a wave spring, a slide gear, an inner gear, and an output shaft in the clutch unit in FIG. 1.
FIG. 6 is a side view of the inner gear and the output shaft of FIG. 5 as viewed from an output side.
FIG. 7 is a side view showing an example of a detent part of an inner gear and an output shaft in another embodiment of the present invention.
FIG. 8 is a side view showing another example of the detent part of the inner gear and the output shaft in another embodiment of the present invention.
FIG. 9 is an enlarged plan view of a main part showing a part X in FIG. 1.
FIG. 10 is a cross-sectional view showing an operation state of the clutch unit in FIG. 1.

### DESCRIPTION OF EMBODIMENTS

Embodiments of a clutch unit according to the present invention are described in detail with reference to the drawings. In the following embodiments, a clutch unit incorporated in an automobile seat lifter unit is described as an example. However, the present invention is also applicable to other than the automobile seat lifter unit.

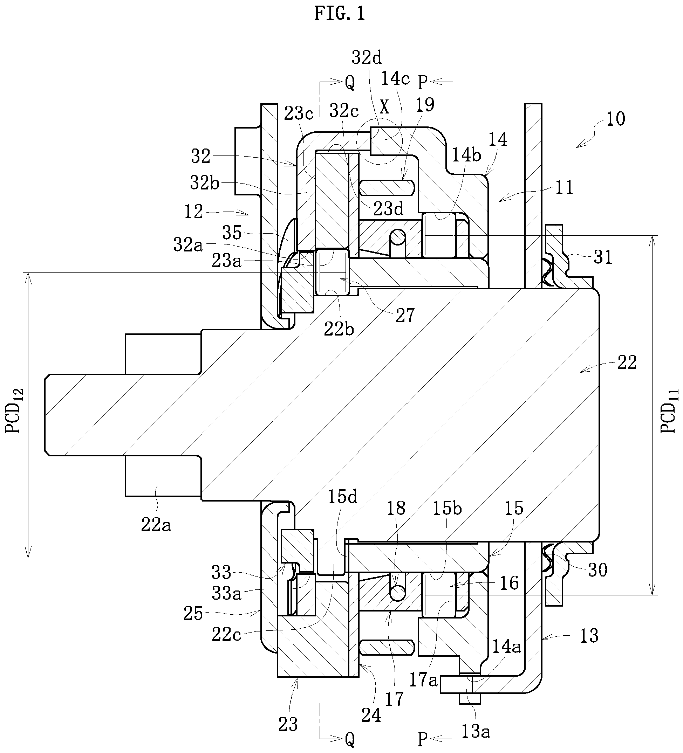

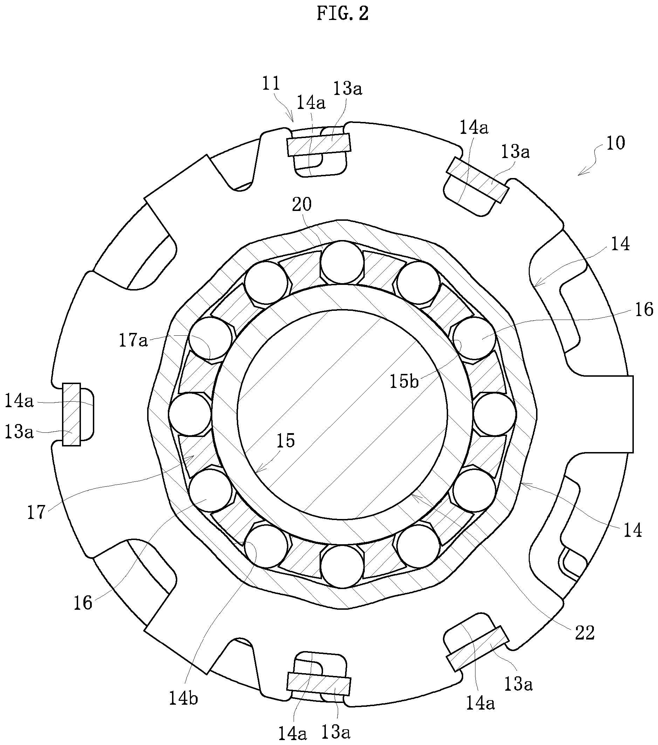

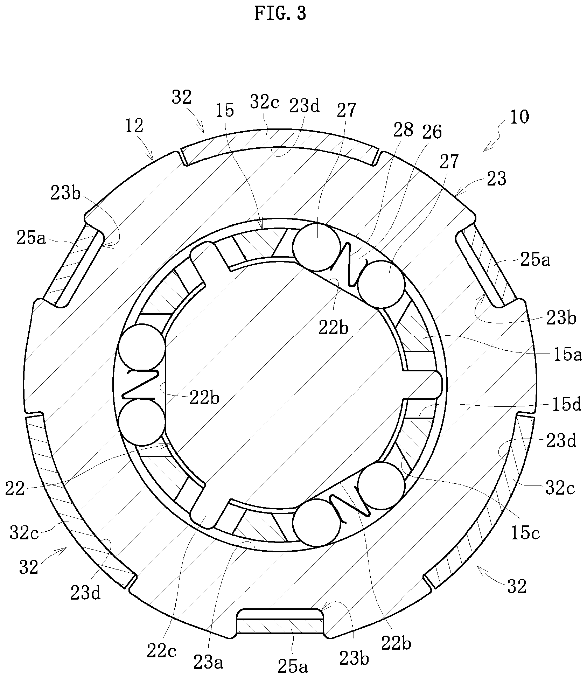

FIG. 1 is a cross-sectional view showing an overall configuration of the clutch unit, FIG. 2 is a cross-sectional view taken along a line P-P in FIG. 1, and FIG. 3 is a cross-sectional view taken along a line Q-Q in FIG. 1. Before describing a characteristic configuration of this embodiment, the overall configuration of the clutch unit is described.

As shown in FIG. 1, the clutch unit 10 of this embodiment has a structure in which a lever-side clutch part 11 as an input-side clutch part and a brake-side clutch part 12 as an output-side clutch part are unitized.

The lever-side clutch part 11 controls transmission and blocking of a rotational torque input by lever operation. The brake-side clutch part 12 has a reverse input blocking function of transmitting the rotational torque from the lever-side clutch part 11 to an output side and blocking the rotational torque reversely input from the output side.

As shown in FIGS. 1 and 2, the lever-side clutch part 11 has its main part constituted of a side plate 13 and an outer ring 14 as input members, an inner ring 15 as a coupling member, plural cylindrical rollers 16 as engagement elements, a cage 17, an inner centering spring 18, and an outer centering spring 19.

The side plate 13 and the outer ring 14 are integrated by fitting claw parts 13a formed on the outer peripheral edge of the side plate 13 into notch concave parts 14a formed on the outer peripheral edge of the outer ring 14 and caulking the same, and the rotational torque is input thereto by lever operation.

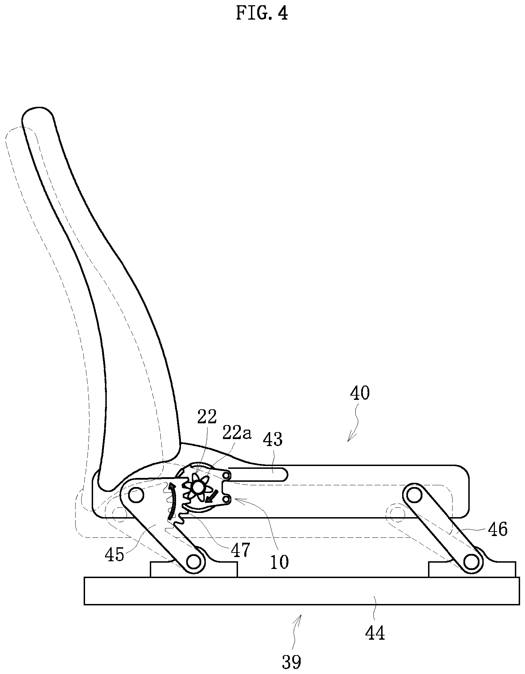

Plural cam surfaces 14b are formed on the inner periphery of the outer ring 14 at equal intervals in the circumferential direction. The rotational torque is input to the outer ring 14 using an operation lever 43 (see FIG. 4) attached to the side plate 13 by screwing or the like.

The inner ring 15 has a cylindrical shape through which an output shaft 22 is inserted, and includes plural pillar parts 15a (see FIG. 3) having its brake-side end part protruding in the axial direction. The inner ring 15 transmits the rotational torque input from the outer ring 14 to the brake-side clutch part 12.

A wedge gap 20 is formed between a cylindrical outer peripheral surface 15b of the inner ring 15 and the cam surface 14b formed on the inner periphery of the outer ring 14.

The cylindrical rollers 16 control transmission and blocking of the rotational torque from the outer ring 14 by engagement with and disengagement from the wedge gap 20.

The cage 17 has plural pockets 17a that accommodate and hold the cylindrical rollers 16 at equal intervals in the circumferential direction.

The inner centering spring 18 is a C-shaped elastic member having a circular cross section and arranged between the cage 17 and a cover 24 of the brake-side clutch part 12, both ends of which are locked to a part of the cage 17 and the cover 24.

When the rotational torque is input from the outer ring 14 by lever operation, the inner centering spring 18 is forcibly expanded, with respect to the cover 24 in a stationary state, along with the rotation of the cage 17 following the outer ring 14, thereby elastic force is accumulated. When the rotational torque from the outer ring 14 is no longer input, the cage 17 returns to a neutral state by the elastic force of the inner centering spring 18.

The outer centering spring 19, which is located radially outside the inner centering spring 18, is a C-shaped strip elastic member arranged between the outer ring 14 and the cover 24, both ends of which are locked to a part of the outer ring 14 and the cover 24.

When the rotational torque is input from the outer ring 14 by lever operation, the outer centering spring 19 is forcibly expanded, with respect to the cover 24 in a stationary state, along with the rotation of the outer ring 14, thereby elastic force is accumulated. When the rotational torque from the outer ring 14 is no longer input, the outer ring 14 returns to a neutral state by the elastic force of the outer centering spring 19.

As shown in FIGS. 1 and 3, the brake-side clutch part 12 has its main part constituted of the inner ring 15 of the lever-side clutch part 11, an output shaft 22 as an output member, an outer ring 23 as a stationary member, the cover 24 and a side plate 25, plural pairs (three pairs) of cylindrical rollers 27 as engagement elements, and leaf springs 28 having an N-shaped cross section.

The output shaft 22 has a pinion gear part 22a formed coaxially at an output-side end part thereof. The inner ring 15 is externally inserted into the output shaft 22, and the rotational torque from the lever-side clutch part 11 is output therefrom.

The pinion gear part 22a of the output shaft 22 is coupled to a seat lifter unit 39 (see FIG. 4). By pressing a washer 31 into the input-side end part of the output shaft 22 with a wave washer 30 interposed therebetween, the components of the lever-side clutch part 11 are prevented from coming off.

On the outer periphery of the output shaft 22, plural (three) flat cam surfaces 22b are formed at equal intervals in the circumferential direction. A wedge gap 26 is formed between each cam surface 22b and a cylindrical inner peripheral surface 23a of the outer ring 23.

Two cylindrical rollers 27 and one leaf spring 28 interposed therebetween are arranged in the wedge gap 26, respectively. The cylindrical rollers 27 control blocking of the rotational torque reversely input from the output shaft 22 and transmission of the rotational torque input from the inner ring 15 by engagement with and disengagement from the wedge gap 26. The leaf spring 28 applies separating force to the cylindrical rollers 27 against each other in the circumferential direction.

The cylindrical rollers 27 and the leaf springs 28 are arranged at equal intervals in the circumferential direction by the pillar parts 15a of the inner ring 15 having a function of transmitting the rotational torque input from the outer ring 14 to the output shaft 22. In other words, the pillar parts 15a of the inner ring 15 have a function of accommodating the cylindrical rollers 27 and the leaf springs 28 in pockets 15c and holding the same at equal intervals in the circumferential direction.

The output shaft 22 is provided with plural protrusions 22c for transmitting the rotational torque from the inner ring 15 to the output shaft 22. The protrusions 22c are arranged so as to protrude in the radial direction, at three locations on the outer periphery located between the adjacent cam surfaces 22b.

On the other hand, in each of the pillar parts 15a located at the brake-side end part of the inner ring 15, there is provided a concave hole 15d into which the protrusion 22c of the output shaft 22 is inserted and arranged with a clearance in the circumferential direction.

The outer ring 23, the cover 24, and the side plate 25 are integrated by fitting claw parts 25a formed on the outer peripheral edge part of the side plate 25 into notch concave parts 23b formed on the outer peripheral edge part of the outer ring 23 and notch concave parts formed on the outer peripheral edge part of the cover 24, and caulking the same.

An operation example of the lever-side clutch part 11 and the brake-side clutch part 12 having the above structure is described below.

In the lever-side clutch part 11, when the rotational torque is input to the outer ring 14 by lever operation, the cylindrical rollers 16 are engaged with the wedge gap 20 between the outer ring 14 and the inner ring 15. By this engagement of the cylindrical rollers 16 with the wedge gap 20, the rotational torque is transmitted to the inner ring 15, and the inner ring 15 rotates. At this time, the elastic force is accumulated in both of the centering springs 18 and 19 as the outer ring 14 and the cage 17 rotate.

When the rotational torque is no longer input by lever operation, the cage 17 and the outer ring 14 return to the neutral state by the elastic force of both of the centering springs 18 and 19. On the other hand, the inner ring 15 maintains the given rotational position as it is. Accordingly, the inner ring 15 rotates in an inching manner by repeated rotation of the outer ring 14 due to the pumping movement of the operation lever 43.

In the brake-side clutch part 12, even when the rotational torque is reversely input to the output shaft 22 by a driver or other occupant sitting on a seat 40 (see FIG. 4), the cylindrical rollers 27 are engaged with the wedge gap 26 between the output shaft 22 and the outer ring 23 to cause the output shaft 22 to be locked to the outer ring 23.

In this way, the rotational torque reversely input from the output shaft 22 is locked by the brake-side clutch part 12, and the recirculation of the rotational torque to the lever-side clutch part 11 is blocked. As a result, the seat surface height of the seat 40 is maintained.

On the other hand, when the rotational torque from the lever-side clutch part 11 is input to the inner ring 15 by lever operation, the pillar parts 15a of the inner ring 15 come into contact with the cylindrical rollers 27 and press the cylindrical rollers 27 against the elastic force of the leaf spring 28.

As a result, the cylindrical rollers 27 are disengaged from the wedge gap 26 between the output shaft 22 and the outer ring 23. By this disengagement of the cylindrical rollers 27 from the wedge gap 26, the locked state of the output shaft 22 is released, and the output shaft 22 becomes rotatable.

When the inner ring 15 further rotates, a clearance between the concave hole 15d of the inner ring 15 and the protrusion 22c of the output shaft 22 is narrowed, and the pillar parts 15a of the inner ring 15 abut on the protrusions 22c of the output shaft 22 in the rotation direction.

Thus, the rotational torque from the lever-side clutch part 11 is transmitted to the output shaft 22 through the pillar parts 15a of the inner ring 15 and the protrusions 22c, and the output shaft 22 rotates. That is, when the inner ring 15 rotates in the inching manner, the output shaft 22 also rotates in the inching manner. As a result, the seat surface height of the seat 40 can be adjusted.

The clutch unit 10 described above is used by being incorporated into the automobile seat lifter unit 39 that adjusts the seat height of the seat 40 by lever operation. FIG. 4 shows the seat 40 provided in a passenger compartment of an automobile.

As shown in FIG. 4, the seat surface height of the seat 40 in the seat lifter unit 39 is adjusted by the operation lever 43 attached to the side plate 13 (see FIG. 1) of the lever-side clutch part 11 in the clutch unit 10. The seat lifter unit 39 has the following structure.

One ends of link members 45 and 46 are rotatably pivoted to a slide movable member 44, respectively. The other ends of the link members 45 and 46 are rotatably pivoted to the seat 40, respectively. On the other end of the link member 45, a sector gear 47 is integrally provided. The sector gear 47 meshes with the pinion gear part 22a of the output shaft 22 of the clutch unit 10.

In the seat lifter unit 39, for example, when the seat surface of the seat 40 is lowered, the locked state of the brake-side clutch part 12 (see FIG. 1) is released by lever operation at the lever-side clutch part 11, that is, by swinging the operation lever 43 downward.

By the unlocking at the brake-side clutch part 12, the pinion gear part 22a of the output shaft 22 of the brake-side clutch part 12 rotates clockwise (a direction of an arrow in FIG. 4) by the rotational torque transmitted from the lever-side clutch part 11 to the brake-side clutch part 12.

In the seat lifter unit 39, the sector gear 47 meshing with the pinion gear part 22a swings counterclockwise (a direction of an arrow in FIG. 4), and the link members 45 and 46 are both tilted to cause the seat surface of the seat 40 to be lowered.

When the operation lever 43 is released after the seat surface height of the seat 40 is adjusted in this manner, the operation lever 43 swings upward by the elastic force of both of the centering springs 18 and 19 and returns to its original position (neutral state).

Note that when the operation lever 43 is swung upward, the seat surface of the seat 40 is raised by operation reverse to that described above. When the operation lever 43 is released after the seat height of the seat 40 is adjusted, the operation lever 43 swings downward and returns to its original position (neutral state).

The overall configuration of the clutch unit 10 in this embodiment is as described above, and the characteristic configuration is described in detail below.

When the output shaft 22 is locked at the brake-side clutch part 12, when vertical vibrations occur during running of a vehicle on a rough road in a state of the seat 40 (see FIG. 4) being seated by an occupant, the rotational torque in the forward direction and the rotational torque in the reverse direction are reversely input to the output shaft 22 in an alternately continuous state. Also, when a shocking load is reversely input during a vehicle collision, excessive rotational torque is instantaneously reversely input to the output shaft 22.

As described above, the clutch unit 10 of this embodiment has the following structure to keep locking the output shaft 22, even in a case in which the rotational torque in the forward and reverse directions are continuously reversely input to the output shaft 22, or in which the excessive rotational torque is reversely input to the output shaft 22.

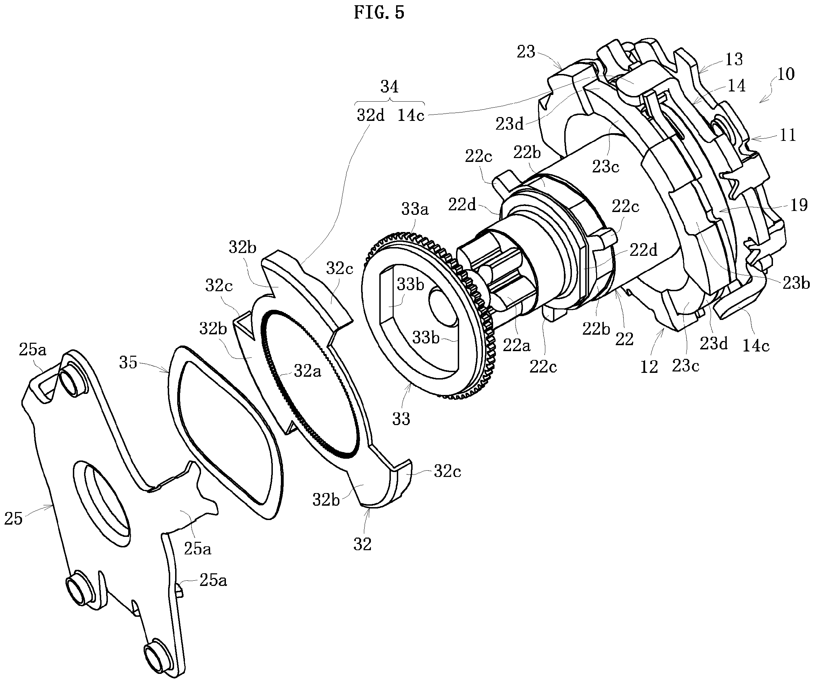

As shown in FIGS. 1 and 5, the brake-side clutch part 12 includes a slide gear 32 attached to the outer ring 23, and an inner gear 33 attached to the output shaft 22. The slide gear 32 is a female gear member that meshes with the output shaft 22 when the rotational torque is blocked and is unmeshed from the output shaft 22 when the rotational torque is transmitted. The inner gear 33 meshes with the slide gear 32.

The slide gear 32 is arranged so as to be axially movable with respect to the output shaft 22. On the other hand, the inner gear 33 is arranged so as to be immovable in the axial direction with respect to the output shaft 22.

The slide gear 32 has a ring shape having a teeth part 32a (hereinafter referred to as internal teeth) formed on the inner periphery. At plural locations (three locations in FIG. 5) in the circumferential direction of the outer periphery of the slide gear 32, flange parts 32b are integrally extended radially outward. Further, a brim part 32c extending toward the outer ring 23 is formed on each of the flange parts 32b.

On the other hand, a concave part 23c corresponding to each of the flange parts 32b is formed on the end surface of the outer ring 23 of the brake-side clutch part 12. Also, a concave part 23d corresponding to each of the brim parts 32c of the slide gear 32 is formed on the outer peripheral surface of the outer ring 23.

The slide gear 32 is assembled to the outer ring 23 by accommodating the flange part 32b in the concave part 23c on the end surface of the outer ring 23 and fitting the brim part 32c into the concave part 23d on the outer peripheral surface of the outer ring 23.

By accommodating the flange part 32b of the slide gear 32 in the concave part 23c of the outer ring 23, the slide gear 32 is allowed to move in the axial direction with respect to the outer ring 23. Further, by fitting the brim part 32c of the slide gear 32 into the concave part 23d of the outer ring 23, the slide gear 32 is restricted to move in the circumferential direction (rotate) with respect to the outer ring 23.

In contrast to the slide gear 32 described above, the inner gear 33 has a ring shape having a teeth part 33a (hereinafter referred to as external teeth) formed on the outer periphery. The external teeth 33a of the inner gear 33 mesh with the internal teeth 32a of the slide gear 32. The inner gear 33 is fitted and fixed on the outer periphery of the output shaft 22, at a portion located axially outside of a portion where the cam surfaces 22b are formed (position opposite to the lever-side clutch part 11).

Because the inner gear 33 is fitted and attached to the output shaft 22 as described above, the inner gear 33 can be manufactured separately from the output shaft 22, and therefore, productivity can be improved and manufacturing costs can be reduced.

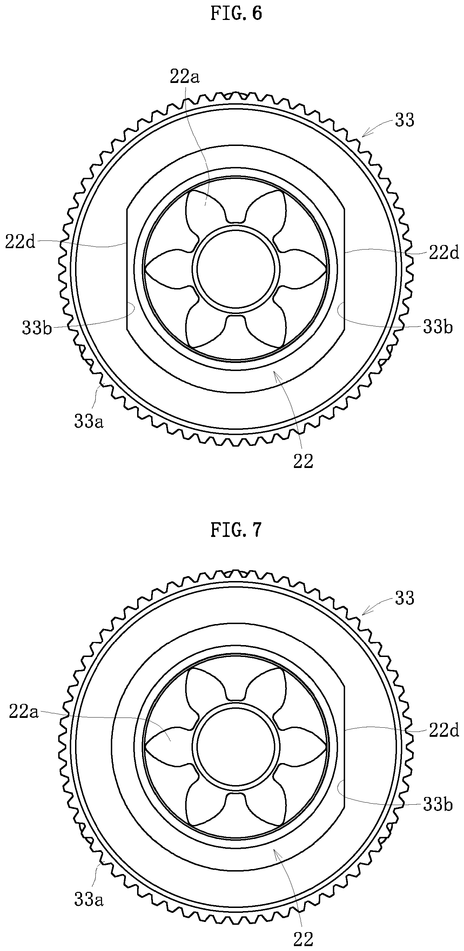

As shown in FIGS. 5 and 6, flat surfaces 33b are formed at opposing portions on the inner periphery of the inner gear 33, and correspondingly thereto, flat surfaces 22d are formed on the outer periphery of the output shaft 22. The flat surfaces 33b of the inner gear 33 and the flat surfaces 22d of the output shaft 22 form a detent part. By having this detent part, when the output shaft 22 rotates, the inner gear 33 co-rotates.

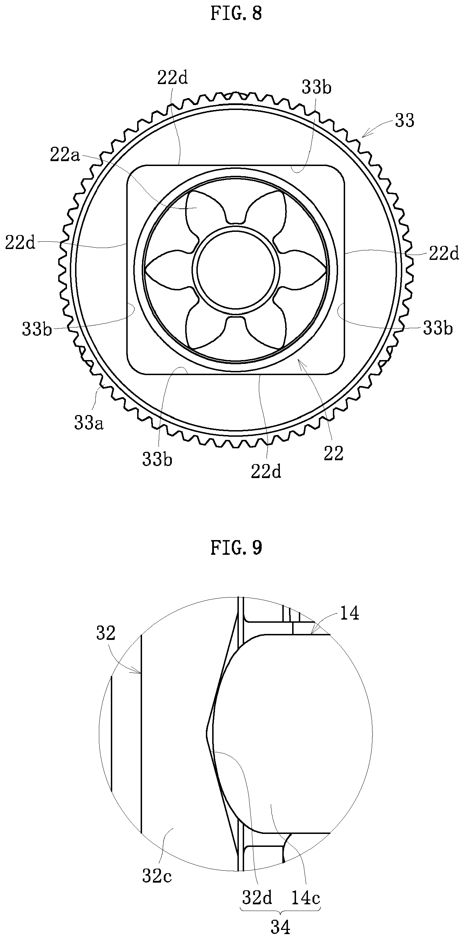

In this embodiment, the detent part is exemplified in which the inner gear 33 is provided with two flat surfaces 33b. However, as another embodiment, as shown in FIG. 7, the inner gear 33 may have a detent part provided with one flat surface 33b, or as shown in FIG. 8, the inner gear 33 may have a detent part provided with four flat surfaces 33b.

On the other hand, a cam mechanism 34 that moves the slide gear 32 in the axial direction to control meshing with and unmeshing from the inner gear 33 of the output shaft 22 is interposed between the slide gear 32 and the outer ring 14 of the lever-side clutch part 11.

As shown in FIGS. 1, 5, and 9, the cam mechanism 34 is constituted of V-shaped cam grooves 32d each of which is formed on the end surface of the brim part 32c of the slide gear 32, and convex parts 14c extending from the outer periphery of the outer ring 14 toward the slide gear 32. In the cam mechanism 34, a curved front end of the convex part 14c is brought into contact with a cam surface of the cam groove 32d of the slide gear 32.

Also, as shown in FIGS. 1 and 5, between the side plate 25 of the brake-side clutch part 12 and the slide gear 32, there is interposed a wave spring 35 that elastically biases the slide gear 32 in a direction allowing the slide gear 32 to mesh with the inner gear 33 of the output shaft 22.

As the wave spring 35, for example, a ring-shaped wave spring as shown in the drawing is suitable. By pressing the slide gear 32 against the outer ring 23 by the elastic force of the wave spring 35, the internal teeth 32a of the slide gear 32 mesh with the external teeth 33a of the inner gear 33.

As described above, by pressing the slide gear 32 against the outer ring 23 by the elastic force of the wave spring 35, the meshing state between the internal teeth 32a of the slide gear 32 and the external teeth 33a of the inner gear 33 can be stabilized.

In the clutch unit 10 of this embodiment, the outer ring 14 is maintained in a neutral state by the outer centering spring 19 when the rotational torque is not input from the outer ring 14 of the lever-side clutch part 11.

At this time, in the cam mechanism 34 of the brake-side clutch part 12, the convex part 14c of the outer ring 14 of the lever-side clutch part 11 and the cam groove 32d of the slide gear 32 are in a neutral position (see FIG. 9).

Therefore, the slide gear 32 is pressed in the axial direction by the elastic force of the wave spring 35, and the internal teeth 32a of the slide gear 32 mesh with the external teeth 33a of the inner gear 33 (see FIG. 1). As a result, the output shaft 22 is brought into the locked state.

Accordingly, even when a contact position of each of the cylindrical rollers 27 between the outer ring 23 and the output shaft 22 is slightly shifted, or hysteresis of elastic deformation exists on the output shaft 22, the outer ring 23, and the cylindrical rollers 27 to which the rotational torque is applied, the output shaft 22 can be prevented from gradually rotating due to the meshing between the internal teeth 32a of the slide gear 32 and the external teeth 33a of the inner gear 33. As a result, a phenomenon in which the seat 40 is slightly lowered can be prevented from occurring.

Further, the meshing between the internal teeth 32a of the slide gear 32 and the external teeth 33a of the inner gear 33 allows the output shaft 22 to be kept locked even when the shocking load is reversely input to the output shaft 22. Accordingly, a large torque load can be applied to the brake-side clutch part 12.

As a result, the number of pairs of cylindrical rollers 27 constituting the brake-side clutch part 12, that is, the number of cylindrical rollers 27 having a function of controlling the blocking and transmission of the normal rotational torque can be reduced, and thereby the clutch unit 10 can be reduced in weight and size, and in cost.

For example, in the conventional clutch unit disclosed in Patent Literature 1 (see FIG. 5 of Patent Literature 1), six pairs (12 pieces) of cylindrical rollers constitute a brake-side clutch part.

In contrast, in the clutch unit 10 of this embodiment (see FIG. 3), by constituting the brake-side clutch part 12 with three pairs (six pieces) of cylindrical rollers 27, the torque load of the same capacity as that of the conventional clutch unit can be secured.

In this way, by arranging the minimum required three pairs of cylindrical rollers 27, the number of cylindrical rollers 27 can be reduced, and the brake-side clutch part 12, and thus the entire clutch unit 10, can be reduced in weight and size, and in cost.

In addition, by arranging the cylindrical rollers 27 at three locations in the circumferential direction at equal intervals, a distribution of the reversely input torque from the output shaft 22 is optimally balanced as compared to the case in which the cylindrical rollers are arranged at other than three locations. Therefore, stable operation can be ensured.

Further, by setting the axial dimension and the outer diameter dimension of the cylindrical roller 27 in the brake-side clutch part 12 of this embodiment larger than those of the cylindrical rollers in the conventional brake-side clutch part, the torque load of the same capacity as that of the conventional clutch unit can be secured.

From the above, in order to secure a predetermined torque load, in the conventional clutch unit (see FIG. 1 of Patent Literature 1), the PCD of the cylindrical rollers of the brake-side clutch part needs to be made larger than the PCD of the cylindrical rollers of the lever-side clutch part.

On the other hand, in the clutch unit 10 of this embodiment (see FIG. 1), the PCD₁₂ of the cylindrical rollers 27 of the brake-side clutch part 12 can be made smaller than the PCD₁₁ of the cylindrical rollers 16 of the lever-side clutch part 11.

As a result, in the clutch unit 10 of this embodiment, the outer diameter dimension of the brake-side clutch part 12 can be reduced, and therefore, the entire clutch unit 10 can be reduced in weight and size.

On the other hand, when the rotational torque is input from the outer ring 14 of the lever-side clutch part 11, in the cam mechanism 34 of the brake-side clutch part 12, the convex part 14c of the outer ring 14 and the cam groove 32d of the brim part 32c of the slide gear 32 become shifted in phase from each other.

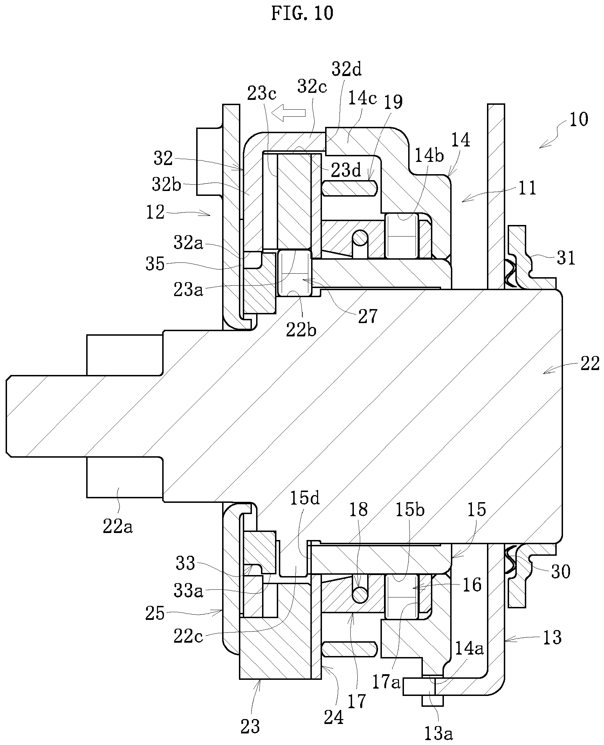

Due to the shift in phase between the convex part 14c and the cam groove 32d, as shown in FIG. 10, the slide gear 32 moves in the axial direction so as to approach the side plate 25 against the elastic force of the wave spring 35 (see an outlined arrow in the same drawing).

Due to the axial movement of the slide gear 32, the internal teeth 32a of the slide gear 32 is unmeshed from the external teeth 33a of the inner gear 33, and the meshing state of the internal teeth 32a of the slide gear 32 and the external teeth 33a of the inner gear 33 is released. As a result, the output shaft 22 becomes rotatable with respect to the outer ring 23.

Note that, in the brake-side clutch part 12, the cylindrical rollers 27 needs to be kept engaged by the inner ring 15 until the internal teeth 32a of the slide gear 32 is completely unmeshed from the external teeth 33a of the inner gear 33 and the output shaft 22 becomes rotatable.

In this embodiment, the cam mechanism 34, which moves the slide gear 32 in the axial direction to control the meshing with and unmeshing from the inner gear 33 of the output shaft 22, adopts the structure of being interposed between the slide gear 32 and the outer ring 14. Accordingly, the meshing and unmeshing between the slide gear 32 and the inner gear 33 can be easily performed.

Further, immediately after the internal teeth 32a of the slide gear 32 is unmeshed from the external teeth 33a of the inner gear 33, in the brake-side clutch part 12, the cylindrical rollers 27 are engaged with the wedge gap 26 between the outer ring 23 and the output shaft 22. Therefore, even when the rotational torque is reversely input to the output shaft 22 at this point, the output shaft 22 is kept locked.

Thereafter, when the internal teeth 32a of the slide gear 32 is completely unmeshed from the external teeth 33a of the inner gear 33 due to the axial movement of the slide gear 32, the cylindrical rollers 27 are disengaged from the wedge gap 26 between the outer ring 23 and the output shaft 22. Therefore, generation of abnormal noise such as tooth hammering between the slide gear 32 and the output shaft 22 during lever operation is prevented.

Further, when the inner ring 15 of the lever-side clutch part 12 rotates, as described above, the concave hole 15d of the inner ring 15 and the protrusion 22c of the output shaft 22 are engaged with each other, and the rotational torque is transmitted to the output shaft 22 to cause the output shaft 22 to rotate. As a result, the seat surface height of the seat 40 can be adjusted.

As described above, in the brake-side clutch part 12, not only the structure in which the internal teeth 32a of the slide gear 32 and the external teeth 33a of the inner gear 33 are engaged with each other, but the structure in which the cylindrical rollers 27 are engaged with the wedge gap 26 between the outer ring 23 and the output shaft 22 becomes also necessary.

## Claims

1. A clutch unit (10) comprising:
an input-side clutch part that controls transmission and blocking of a rotational torque to be input; and
an output-side clutch part that transmits the rotational torque from the input-side clutch part to an output side and blocks the rotational torque reversely input from the output side,
wherein the output-side clutch part includes a stationary member (23) whose rotation is restrained, and an output member (22) whose rotation is output, and
a female gear member (32) that meshes with the output member (22) when the rotational torque is blocked and is unmeshed from the output member (22) when the rotational torque is transmitted is attached with the stationary member (23), and a male gear member (33) that meshes with the female gear member (32) is attached with the output member,
**characterized in that**
the male gear member (33) co-rotates with the output member (22) without slipping in the rotation direction and,
wherein the output-side clutch part includes engagement elements (27) that control blocking of the rotational torque reversely input from the output member (22) and transmission of the rotational torque input from a coupling member (15) by engagement with and disengagement from wedge gaps (26) between the stationary member (23) and the output member (22).

2. The clutch unit (10) according to claim 1, wherein
the engagement elements (27) are arranged at three locations in a circumferential direction between the stationary member (23) and the output member (22).

3. The clutch unit (10) according to claim 1 or 2, wherein the male gear member (33) is attached to the output member (22) with a detent part (22d, 33b) interposed between the male gear member (33) and the output member (22).

4. The clutch unit (10) according to claim 2 or 3, wherein
the input-side clutch part includes engagement elements that control transmission and blocking of the rotational torque from an input member by engagement and disengagement between the input member and the coupling member, and
a pitch circle diameter (PCD) of the engagement element (27) of the output-side clutch part (12) is set smaller than a PCD of the engagement element (16) of the input-side clutch part (11).

5. The clutch unit (10) according to any one of claims 1 to 4, wherein the input-side clutch part (11) and the output-side clutch part (12) are incorporated in an automobile seat lifter unit (39).

## Patentansprüche

1. Kupplungseinheit (10), umfassend:
einen eingangsseitigen Kupplungsteil, der die Übertragung und Blockierung eines einzugebenden Drehmoments steuert; und
einen ausgangsseitigen Kupplungsteil, der das Drehmoment von dem eingangsseitigen Kupplungsteil zu einer Ausgangsseite überträgt und das von der Ausgangsseite entgegengesetzt eingegebene Drehmoment blockiert,
wobei der ausgangsseitige Kupplungsteil ein stationäres Element (23), dessen Drehung eingeschränkt wird, und ein Ausgangselement (22), dessen Drehung ausgegeben wird, beinhaltet, und
ein weibliches Zahnradelement (32), das in das Ausgangselement (22) eingreift, wenn das Drehmoment blockiert wird, und von dem Ausgangselement (22) gelöst wird, wenn das Drehmoment übertragen wird, an dem stationären Element (23) angebracht ist, und ein männliches Zahnradelement (33), das in das weibliche Zahnradelement (32) eingreift, an dem Ausgangselement angebracht ist,
**dadurch gekennzeichnet, dass**
das männliche Zahnradelement (33) sich gemeinsam mit dem Ausgangselement (22) dreht, ohne in der Drehrichtung zu verrutschen, und
wobei der ausgangsseitige Kupplungsteil Eingriffsbauteile (27) beinhaltet, die ein Blockieren des von dem Ausgangselement (22) entgegengesetzt eingegebenen Drehmoments und eine Übertragung des von einem Kopplungselement (15) eingegebenen Drehmoments durch Eingriff mit und Lösen von Keilspalten (26) zwischen dem stationären Element (23) und dem Ausgangselement (22) steuern.

2. Kupplungseinheit (10) nach Anspruch 1, wobei
die Eingriffsbauteile (27) an drei Stellen in einer Umfangsrichtung zwischen dem stationären Element (23) und dem Ausgangselement (22) angeordnet sind.

3. Kupplungseinheit (10) nach Anspruch 1 oder 2, wobei das männliche Zahnradelement (33) mit einem Rastteil (22d, 33b), das zwischen dem männlichen Zahnradelement (33) und dem Ausgangselement (22) gelagert ist, an dem Ausgangselement (22) angebracht ist.

4. Kupplungseinheit (10) nach Anspruch 2 oder 3, wobei
der eingangsseitige Kupplungsteil Eingriffsbauteile beinhalten, die eine Übertragung und Blockierung des Drehmoments von einem Eingangselement durch Eingriff und Lösen zwischen dem Eingangselement und dem Kopplungselement steuern, und
ein Lochkreisdurchmesser (PCD) des Eingriffsbauteils (27) des ausgangsseitigen Kupplungsteils (12) kleiner als ein PCD des Eingriffsbauteils (16) des eingangsseitigen Kupplungsteils (11) eingestellt ist.

5. Kupplungseinheit (10) nach einem der Ansprüche 1 bis 4, wobei der eingangsseitige Kupplungsteil (11) und der ausgangsseitige Kupplungsteil (12) in einer Automobilsitz-Hebeeinheit (39) integriert sind.

## Revendications

1. Unité d'embrayage (10) comprenant :
une partie d'embrayage côté entrée qui commande la transmission et l'interruption d'un couple de rotation à entrer ; et
une partie d'embrayage côté sortie qui transmet le couple de rotation de la partie d'embrayage côté entrée à un côté sortie et interrompt le couple de rotation entré en sens inverse depuis le côté sortie,
la partie d'embrayage côté sortie comportant un élément fixe (23) dont la rotation est retenue, et un élément de sortie (22) dont la rotation est sortie, et
un élément d'engrenage femelle (32) qui se met en prise avec l'élément de sortie (22) lorsque le couple de rotation est interrompu et qui est désolidarisé de l'élément de sortie (22) lorsque le couple de rotation est transmis et est attaché à l'élément fixe (23), et un élément d'engrenage mâle (33) qui se met en prise avec l'élément d'engrenage femelle (32) est attaché à l'élément de sortie,
**caractérisé en ce que**
l'élément d'engrenage mâle (33) tournant avec l'élément de sortie (22) dans le même sens et sans glisser dans le sens de rotation et,
la partie d'embrayage côté sortie comportant des éléments de mise en prise (27) qui commandent l'interruption du couple de rotation entré en sens inverse depuis l'élément de sortie (22) et la transmission du couple de rotation entré à partir d'un élément de couplage (15) en mettant en prise avec et en désolidarisant des espaces en coin (26) entre l'élément fixe (23) et l'élément de sortie (22).

2. Unité d'embrayage (10) selon la revendication 1, dans laquelle
les éléments de mise en prise (27) sont agencés à trois emplacements dans une direction circonférentielle entre l'élément fixe (23) et l'élément de sortie (22).

3. Unité d'embrayage (10) selon la revendication 1 ou 2, dans laquelle l'élément d'engrenage mâle (33) est fixé à l'élément de sortie (22) avec une partie d'encliquetage (22d, 33b) interposée entre l'élément d'engrenage mâle (33) et l'élément de sortie (22).

4. Unité d'embrayage (10) selon la revendication 2 ou 3, dans laquelle
la partie d'embrayage côté entrée comporte des éléments de mise en prise qui commandent la transmission et l'interruption du couple de rotation d'un élément d'entrée par mise en prise et désolidarisation entre l'élément d'entrée et l'élément de couplage, et
un diamètre de cercle primitif (PCD) de l'élément de mise en prise (27) de l'élément d'embrayage côté sortie (12) est réglé pour être plus petit qu'un PCD de l'élément de mise en prise (16) de la partie d'embrayage côté entrée (11).

5. Unité d'embrayage (10) selon l'une quelconque des revendications 1 à 4, dans laquelle la partie d'embrayage côté entrée (11) et la partie d'embrayage côté sortie (12) sont incorporées dans une unité de réglage de hauteur de siège d'automobile (39).
